# EUROPEAN PATENT APPLICATION

(11) **EP 1 555 119 A1**
(43) Date of publication of application: **20.07.2005**
(21) Application number: 05075099.1
(22) Date of filing: 13.01.2005
(51) Int. Cl.: B32B 17/10, B32B 18/00, A47B 96/20

(54) **Multi-layer panel**

(30) Priority: 16.01.2004 IT MI20040049
(71) Applicant: MDF Italia SRL, 20143 Milano (IT)
(72) Inventor: Fattorini, Bruno, 20143 Milan (IT)
(74) Representative: Martegani, Franco

(57) **Abstract**

A multi-layer panel (1), particularly but not exclusively for furnishing, which comprises at least a glass layer (2) and at least a layer of laminated porcelain ceramic material (3) joined together.

## Description

The present invention refers to a multi-layer panel and in particular a multi-layer panel for furnishing.

The panels normally used in furnishing are made from conventional materials, such as wood, aluminium, glass or marble that have problems of wear, scratching, staining, opaqueness and weight.

Therefore, there is a need developing to make panels with innovative technical characteristics capable of overcoming the aforementioned drawbacks of conventional panels and at the same time having high aesthetic and chromatic characteristics.

Therefore, a purpose of the present invention is that of providing a multi-layer panel that has high physical and mechanical characteristics together with good aesthetic characteristics.

Another purpose of the present invention is that of providing a multi-layer panel that allows the technical and aesthetic characteristics of porcelain ceramics to be combined with the technical and aesthetic characteristics of glass.

Another purpose of the present invention is that of providing a multi-layer panel with competitive production costs.

In view of the aforementioned purposes, according to the present invention, it has been thought of to make a multi-layer panel having the characteristics outlined in the attached claims.

The structural and functional characteristics of the present invention and its advantages compared to the prior art shall become even clearer from an examination of the following description, referring to the attached drawings, which show a multi-layer panel made according to the innovative principles of the invention itself.

In the drawings:
- figure 1 is a perspective view of a multi-layer panel according to the present invention;
- figure 2 is a schematic perspective view of an alternative embodiment of the multi-layer panel according to the present invention.

With reference to the figures, the multi-layer panel in object is wholly indicated with 1, and in the illustrated example, according to the present invention, comprises a glass layer and a layer of laminated porcelain ceramic material joined together.

In detail, the glass layer 2 and the layer of laminated porcelain ceramic material 3 are joined together by gluing. For such a purpose, the multi-layer panel 1 according to the present invention has a layer 4 of adhesive and/or an adhesive film placed between the glass layer 2 and the layer of laminated porcelain ceramic material 3. The thickness and type of adhesive and/or of adhesive film vary according to the product and the strength that one wishes to obtain.

A porcelain ceramic material particularly suitable for the purpose is Lamina® that can easily be found on the market and well known to the average man skilled in the art, whereas for the glass layer it is even possible to use sheets of lacquered or bulk-coloured glass.

The use of such glass sheets allows a double face multi-layer panel to be obtained that can, therefore, be used irrespectively on one or the other side according to the aesthetic requirements of the user.

The glass layer 2 of the multi-layer panel 1 according to the present invention advantageously has a thickness within the range between 5 mm and 15 mm.

Preferably, the thickness of the sheet of glass is about 6 mm.

The layer of laminated porcelain ceramic material 3 of the multi-layer panel 1 according to the present invention, on the other hand, has a thickness within the range between 1 mm and 5 mm.

Preferably, the thickness of the layer of laminated porcelain ceramic material is about 3 mm.

The joining of the two layers of material leads to having a panel that whilst maintaining a low thickness allows the predetermined levels to be achieved that overcome the physical and mechanical limitations of the materials taken individually.

To further increase the strength of the multi-layer panel 1 it is possible to treat the sheet of glass 2 with appropriate distempers in a *per se* known way.

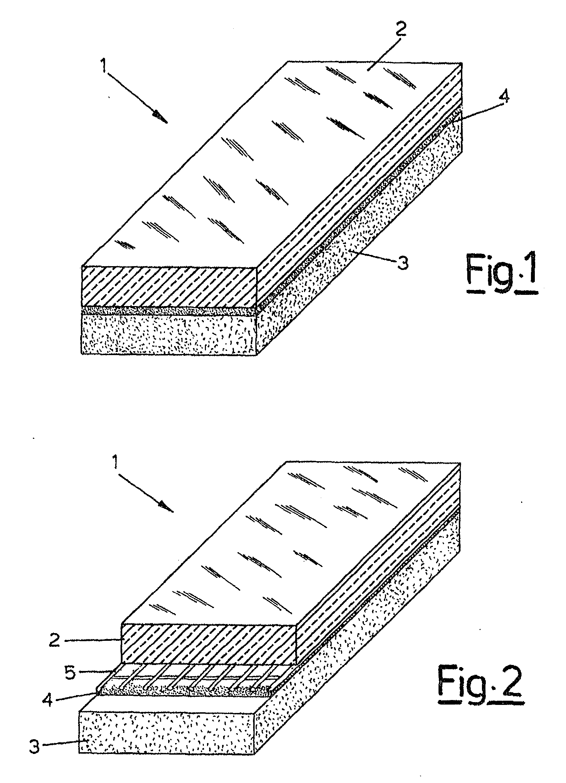

In figure 2 an alternative embodiment of the present invention is shown that is totally similar to the one illustrated in figure 1 apart from the fact that it has a structural mesh 5 placed between the glass layer 2 and the layer of laminated porcelain ceramic material 3.

For such a purpose, the structural meshes 5 can be made from PVC, nylon, fibreglass or carbon.

From that which has been described above with reference to the figures, it is clear how a multi-layer panel 1 according to the invention is particularly useful and advantageous since it allows a double face panel to be made with innovative aesthetic characteristics, due to the uncommon coupling of the materials and the variety of the sheets of glass that can be used, with excellent processing ability and size tolerances, competitive costs and high standards.

The purpose mentioned in the preamble of the description is thus achieved.

Of course, the shapes and the sizes of the invention can be different to those shown just as a non-limiting example in the drawings, just as the materials can also be different.

The scope of protection of the invention is therefore defined by the attached claims.

## Claims

1. Multi-layer panel (1) **characterised in that** it comprises at least one layer of glass (2) and at least one layer of porcelain ceramic material (3) joined together.

2. Multi-layer panel (1) according to claim 1, **characterised in that** it comprises a layer (4) of adhesive and/or of adhesive film placed between the layer of glass (2) and the layer of laminated porcelain ceramic material (3) to join together said at least one layer of glass (2) and said at least one layer of laminated porcelain ceramic material (3).

3. Multi-layer panel (1) **characterised in that** it comprises a structural mesh (5) placed by gluing between said layer of glass (2) and said layer of laminated porcelain ceramic material (3).

4. Multi-layer panel (1) according to claim 3, **characterised in that** said structural mesh (5) is made from PVC, nylon, fibreglass or carbon.

5. Multi-layer panel (1) according to any one of the previous claims, **characterised in that** said layer of laminated porcelain ceramic material (3) is Lamina®.

6. Multi-layer panel (1) according to claim 1, **characterised in that** said layer of glass (2) has a thickness within the range between 5 mm and 15 mm.

7. Multi-layer panel (1) according to claim 1, **characterised in that** said layer (3) of laminated porcelain ceramic material has a thickness within the range between 1 mm and 5 mm.
